# EUROPEAN PATENT SPECIFICATION

(11) **EP 1 953 035 B1**
(45) Date of publication and mention of the grant of the patent: **04.11.2015**
(21) Application number: 08150084.5
(22) Date of filing: 08.01.2008
(51) Int. Cl.: B60N 2/28, B60N 2/30

(54) **Child seat**
Kindersitz
Siège enfant

(30) Priority: 31.01.2007 JP 2007021516
(43) Date of publication of application: 06.08.2008
(73) Proprietor: TAKATA CORPORATION, Minato-ku, Tokyo 106-8510 (JP)
(72) Inventor: Sakumoto, Masayuki, Tokyo 106-8510 (JP)
(74) Representative: Vossius & Partner Patentanwälte Rechtsanwälte mbB

(56) References cited:
- WO-A1-98/25789
- DE-A1- 10 260 812
- US-A1- 2004 232 747

## Description

The present invention relates to a child seat to be mounted on a seat cushion of a vehicle, and more specifically, to a child seat with a shock-absorbing mechanism effective in a head-on crash of a vehicle.

A child seat has a base including a bottom portion to be placed on a seat cushion of a vehicle and an upright portion standing upright from the bottom portion, and a shell including a seat portion on which a child occupant sits and a back portion for supporting the back of the child occupant. The seat portion is disposed on the bottom portion, and the back portion is disposed along the upright portion.

JP-A-2003-63291 (Patent Document 1) discloses a child seat having a mechanism for absorbing an impact to be exerted on a child occupant upon a head-on crash of a vehicle carrying a child seat mounted so that the child occupant faces the rear of the vehicle.

The child seat disclosed therein rotates a back plate portion of the child seat in the upright direction upon a head-on crash of a vehicle, and has a shock absorber to be compressed and plastically deformed by the rotation.

Document WO98/25789 discloses a child seat according to the preamble of claim 1.

An object of the present invention is to provide a child seat capable of more sufficiently absorbing an impact to be exerted on a child occupant upon a head-on crash of a vehicle carrying a child seat mounted so that a shell faces the rear of the vehicle than the child seat disclosed in JP-A-2003-63291.

A child seat according to the present invention (claim 1) includes a base including a bottom portion to be placed on a seat cushion of a vehicle and an upright portion standing upright from the bottom portion; and a shell including a seat portion on which a child occupant sits and a back portion for supporting the back of the child occupant. The seat portion is disposed on the bottom portion, and the back portion is disposed along the upright portion. The child seat, in a rear-facing mounting state in which the child seat is mounted on the seat cushion so as to face the rear of the vehicle, takes an inclined-forward position in which the back portion leans toward the front of the vehicle. The child seat includes a guide for moving the shell diagonally forward and upward along the upright portion when the vehicle carrying the child seat mounted in the rear-facing mounting state experiences a head-on crash. The child seat includes a shock absorber for absorbing an impact by being deformed by the shell moving diagonally forward and upward.

The child seat described in claim 2 is the child seat according to claim 1. An upper portion of one of the upright portion and the back portion is provided with an elongated aperture or a groove serving as the guide that extend diagonally forward and upward in the rear-facing mounting state. The other of the upright portion and the back portion is provided with an engaging portion engaged with the guide.

The child seat described in claim 3 is the child seat according to claim 2. An angle of elevation of the guide in the rear-facing mounting state is in the range of 50 to 70 degrees.

The child seat described in claim 4 is the child seat according to claims 2 or 3. The child seat further includes a link arm provided between the seat portion of the shell and the bottom portion of the base so as to extend in the front-rear direction in the rear-facing mounting state. A front end of the link arm in the front-rear direction of the vehicle is rotatably connected to the bottom portion with a lower pivot, and a back end of the link arm in the front-rear direction of the vehicle is rotatably connected to the seat portion with an upper pivot. The link arm is rotated forward and upward about the lower pivot when the shell moves diagonally forward and upward.

The child seat described in claim 5 is the child seat according to claim 4. The child seat further includes a load bearing member that moves in response to the forward and upward rotation of the link arm and applies a load to the shock absorber so as to deform the shock absorber. The load bearing member is connected to the link arm.

The child seat described in claim 6 is the child seat according to claim 5. In the rear-facing mounting state, a front end of the load bearing member is connected to the link arm at a connection point positioned in front of and above the upper pivot. The load bearing member extends backward from the connection point through a vertical drop wall provided on the seat portion. The load bearing member has a stopper at a back end, and the shock absorber is disposed between the stopper and the vertical drop wall so as to be deformed by being compressed between the vertical drop wall and the stopper by the shell moving diagonally forward and upward, thereby absorbing an impact.

The child seat described in claim 7 is the child seat according to claim 6. The load bearing member includes a rod, and the shock absorber has a cylindrical shape and is fitted around the rod.

The child seat described in claim 8 is the child seat according to any one of claims 1 to 7. The shock absorber is disposed between a supporting member provided on the upright portion and a supporting member provided on the back portion.

The child seat described in claim 9 is the child seat according to any one of claims 1 to 7. The shock absorber is disposed between a supporting member provided on the bottom portion and a supporting member provided on the seat portion.

Upon a head-on crash of a vehicle carrying a child seat of the present invention mounted so that a child occupant faces the rear of the vehicle, the shell moves upward along the upright portion of the base. This movement deforms the shock absorber, whereby an impact to be exerted on the child occupant can be absorbed.

More specifically, upon a head-on crash of a vehicle carrying a child seat mounted in a rear-facing state, the child occupant moves diagonally forward and upward together with the shell.

The present invention is designed to move the shell diagonally forward and upward along the upright portion of the base upon a head-on crash, by which the shock absorber is deformed so as to absorb an impact. Thus, an impact to be exerted on the child occupant can be absorbed.

The child seat disclosed in the above-mentioned JP-A-2003-63291 is designed to rotate the back plate portion vertically upwards upon a head-on crash, by which the shock absorber is deformed so as to absorb an impact. This arrangement of the shock absorber can absorb an impact due to the rotation of the back plate portion. However, an impact to be exerted on a child occupant when the child, who has moved along the back plate portion, is restrained from continuing to move by child restraint webbing cannot be reduced.

With the present invention, the shell and the child occupant move diagonally forward and upward upon a head-on crash. The movement of the shell is gradually slowed down by the shock absorber. The movement of the child restrained to the shell with the child restraint webbing is also gradually slowed down, whereby an impact to be exerted on the child occupant can be reduced.

According to the child seat of claim 2, the shell is guided by the guide and smoothly moves diagonally forward and upward upon a head-on crash.

As claimed in claim 3, by providing an elongated aperture or a groove constituting the guide at an angle of elevation of in the range of 50 to 70 degrees, an impact to be exerted on the child occupant upon a head-on crash can be reduced.

According to the child seat of claim 4, when the shell moves diagonally forward and upward, the lower portion of the shell is guided by the rotatable link arm and smoothly moves diagonally forward and upward.

According to the child seat of any one of claims 5 to 7, in response to the rotation of the link arm, the shock absorber is deformed and absorbs an impact. Because there is a space under the seat portion of the shell, the shock absorber may be disposed therein. This increases the design flexibility of the child seat and the shock absorber.

In the present invention, the shock absorber may be disposed between the upright portion of the base and the back portion of the shell as claimed in claim 8, or it may be disposed between the bottom portion of the base and the seat portion of the shell as claimed in claim 9.

Embodiments of the present invention will now be described with reference to the drawings.
FIG. 1 is an exploded perspective view of a child seat according to an embodiment;
FIG. 2 is a vertical sectional view taken in the front-rear direction of the child seat according to the embodiment;
FIG. 3 is a sectional view of the child seat of FIG. 2, where it has moved diagonally forward and upward;
FIG. 4 is a vertical sectional view illustrating a deformation behavior of a shock absorber;
FIG. 5 is a vertical sectional view of a child seat according to another embodiment; and
FIG. 6 is a vertical sectional view of a child seat according to yet another embodiment.

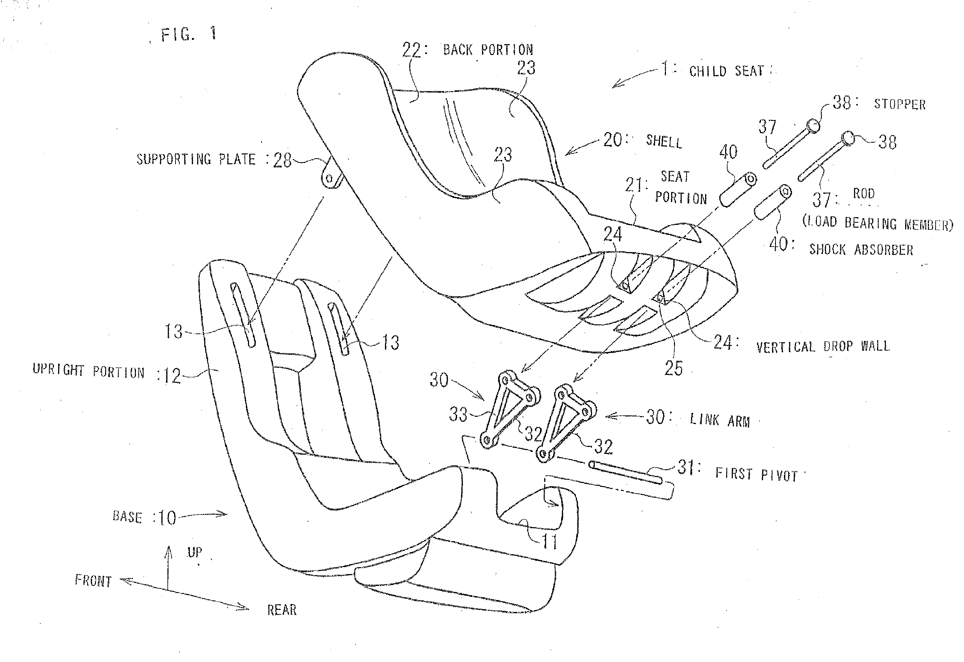

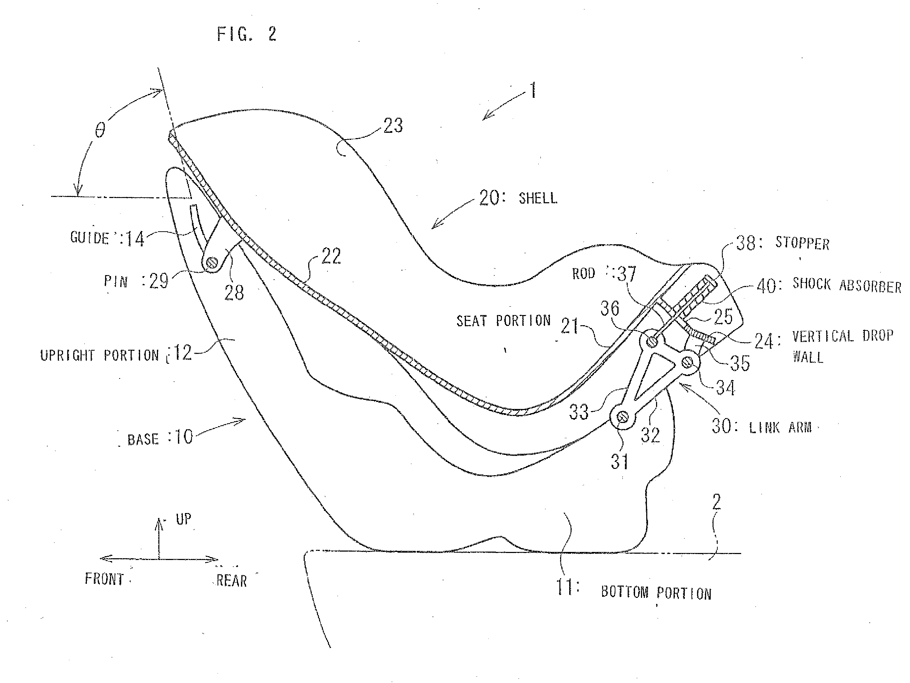

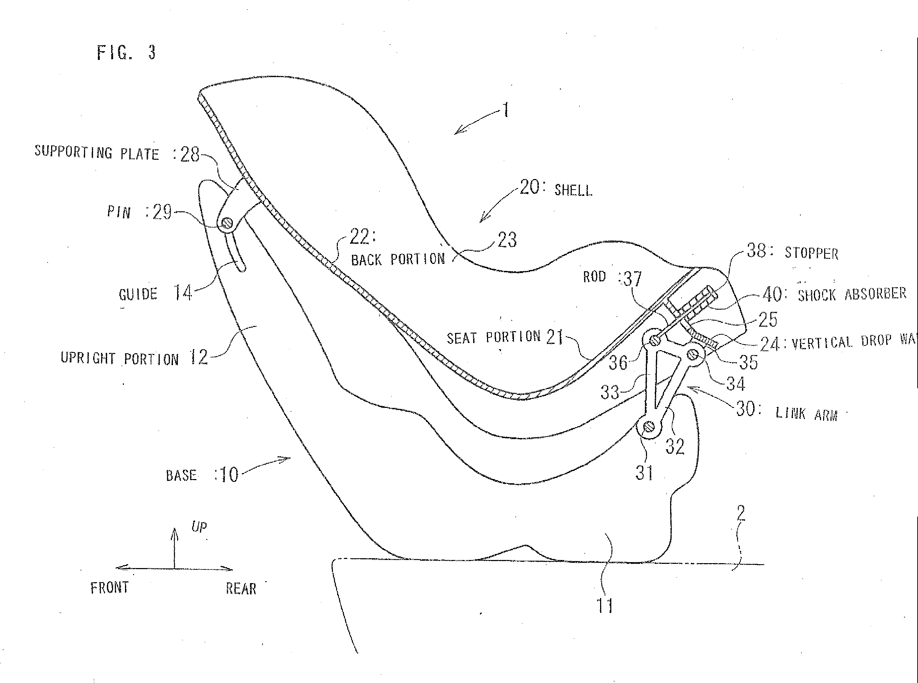

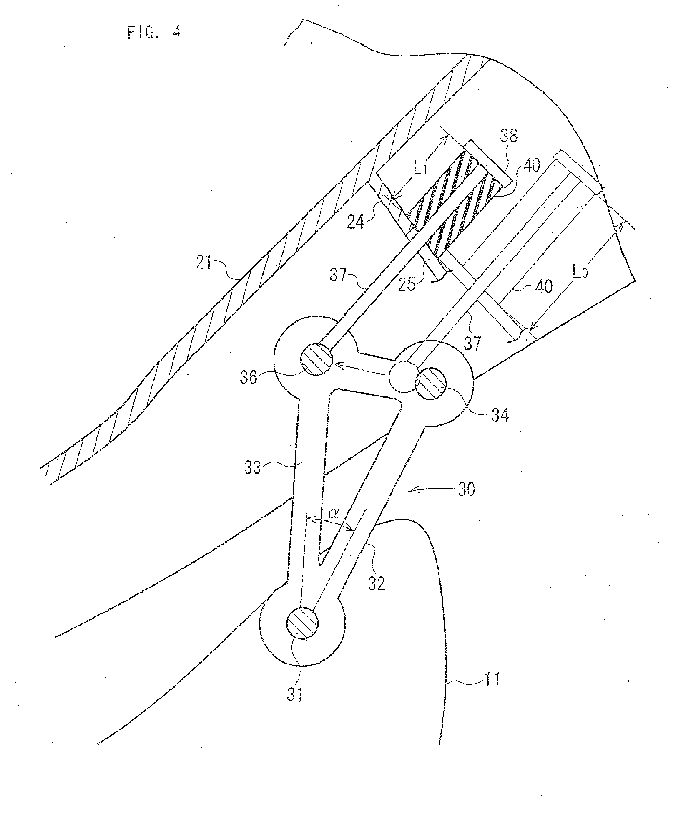

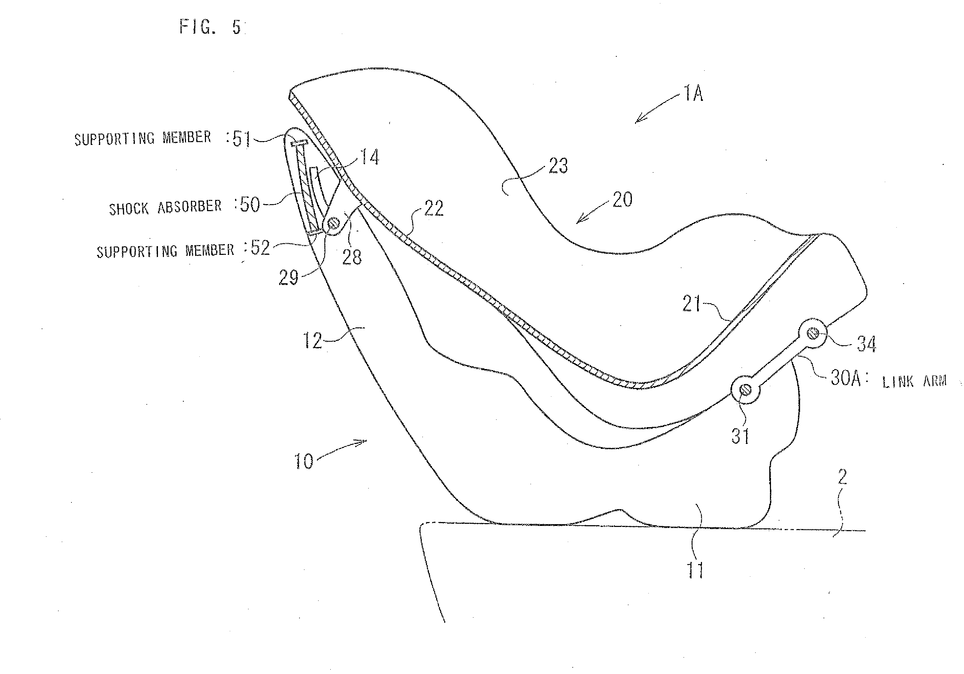

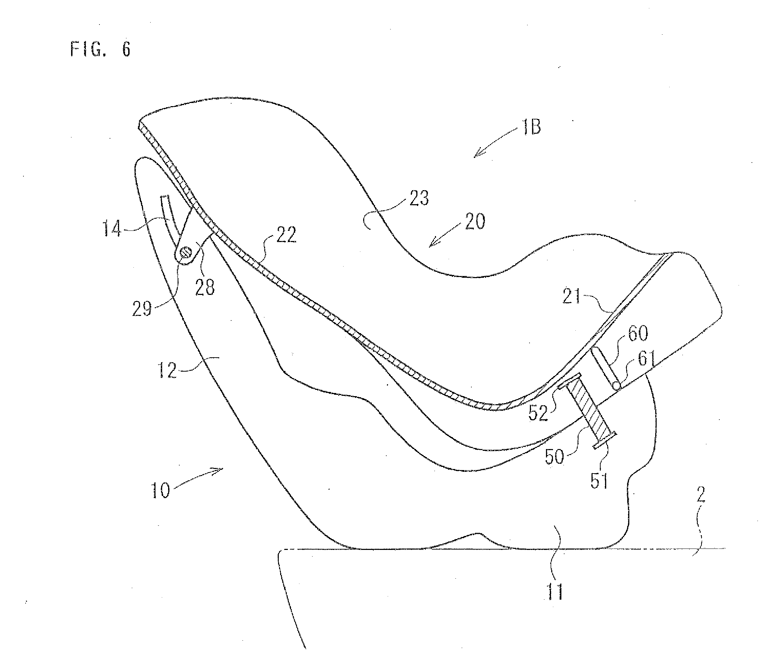

FIG. 1 is an exploded perspective view of a child seat according to an embodiment. FIG. 2 is a vertical sectional view taken in the front-rear direction of the child seat according to the embodiment. FIG. 3 is a sectional view of the child seat of FIG. 2, where it has moved diagonally forward and upward. FIG. 4 is a vertical sectional view illustrating a deformation behavior of a shock absorber. FIG. 5 is a vertical sectional view of a child seat according to another embodiment. FIG. 6 is a vertical sectional view of a child seat according to yet another embodiment.

In the following description, terms implying the front-rear direction, such as "forward", "front", "backward", and "back", are used to imply the front-rear direction of a vehicle.

As shown in FIG. 1, a child seat 1 has a base 10 and a shell 20 for accommodating a child occupant, both having an L-shape when viewed from the side. The shell 20 is provided with known child restraint webbing (not shown) used to restrain a child occupant.

The base 10 has a bottom portion 11 to be placed on a seat cushion 2 (shown in FIGS. 2 and 3) of a vehicle and an upright portion 12 standing upright from the bottom portion 11. In a rear-facing mounting state, in which the child seat 1 is mounted on the seat cushion 2 so that the child occupant faces the rear of the vehicle, the upright portion 12 stands so as to extend diagonally forward and upward from the front end of the bottom portion 11. The upright portion 12 has, at the upper portion, vertically cut grooves 13 for receiving supporting plates 28 therein provided on the shell 20, and guides 14 (shown in FIGS. 2 and 3) in the form of an elongated aperture or a groove for guiding the supporting plates 28.

The shell 20 has a seat portion 21 on which a child occupant sits, a back portion 22 for supporting the back of the child occupant, and left and right sidewall portions 23.

The seat portion 21 has plate-like vertical drop walls 24 that extend vertically downward on the lower surface thereof. The vertical drop walls 24 have rod-insertion holes 25 that penetrate therethrough in the thickness direction. The rod-insertion holes 25 are in the form of a vertically elongated aperture.

The upper portion of the shell 20 is supported by the base 10 by means of the supporting plates 28 and pins 29 provided so as to project from the supporting plates 28 in the widthwise direction of a vehicle. The pins 29 slidably engage with the guides 14 in the form of an elongated aperture or a groove, enabling the upper portion of the shell 10 to move diagonally forward and upward along the guides 14. The angle of elevation θ (shown in FIG. 2) at which the guides 14 are provided is preferably about in the range of 50 to 70 degrees. The pins 29 are normally positioned at the lower ends of the guides 14. Upon a head-on crash of a vehicle, the pins 29 are moved diagonally forward and upward along the guides 14.

The lower portion of the shell 20 is connected to a bottom portion 11 of the base 10 with link arms 30 so as to be able to move diagonally forward and upward.

The link arms 30 are vertically rotatably connected to the bottom portion 11 at the front ends with a first pivot 31 serving as a lower pivot. The link arms 30 have lower arms 32 extending backward and upward from the first pivot 31 and upper arms 33 extending backward and upward above the lower arms 32 from the first pivot 31. The back ends of the lower arms 32 are connected to the vertical drop walls 24 with brackets 35 and a second pivot 34 serving as an upper pivot. The brackets 35 are fixed to the front faces of the vertical drop walls 24 with screws, etc., and are rotatably connected with the back ends of the lower arms 32 with the second pivot 34.

The back ends of the upper arms 33 are rotatably connected with a third pivot 36, to which the front ends of rods 37 serving as load-bearing members are fixed. In the present embodiment, the front ends of rods 37 are connected to the third pivot 36.

Each of the above-described pivots 31, 34, and 36 is formed of a pin shaft extending in the widthwise direction of a vehicle. The rods 37 extend from the third pivot 36 backward and upward through the rod-insertion holes 25 and are projected from the back surfaces of the vertical drop walls 24. The back ends of the rods 37 are provided with collar-shaped stoppers 38. Shock absorbers 40 are disposed between the stoppers 38 and the vertical drop walls 24.

The shock absorbers 40 are cylindrical members made of a material such as hard rubber, elastomer, deformable synthetic resin, or deformable soft metal. The rods 37 are disposed through the inner holes of the cylindrical members. The shock absorbers 40 abut onto the vertical drop walls 24 at the front ends and onto the stoppers 38 at the back ends.

Usage and operation of the child seat 1 having the above-described structure will be described.

As shown in FIG. 2, the child seat 1 is mounted on the seat cushion 2 in a rear-facing mounting state, and is connected to the seat using seat belt webbing (webbing for adults) installed on the seat or an appropriate anchoring device. In this state, the pins 29 are positioned at the lower ends of the guides 14.

A child sits on the seat portion 21 and leans against the back portion 22. The child is restrained by child restraint webbing, which rests on both shoulders of the child.

Upon a head-on crash of the vehicle, as shown in FIG. 3, the pins 29 move diagonally forward and upward along the guides 14, the link arms 30 rotate forward and upward, and the entirety of the shell 20 moves diagonally forward and upward.

The upper arms 33 of the link arms 30 extend above the lower arms 32, that is, the upper arms 33 are located at positions shifted in the rotational direction by an angle α (FIG. 4) from the lower arms 32. Therefore, at this time, the second pivot 34 rotates forward and upward relatively vertically, and the third pivot 36 rotates forward and upward relatively horizontally. The vertical drop walls 24 move integrally with the second pivot 34. Therefore, when the link arms 30 rotate, the distance of the forward movement of the third pivot 36 is greater than that of the vertical drop walls 24. As a result, the rods 37 are pulled by the third pivot 36 and advance relative to the vertical drop walls 24.

As a result, the shock absorbers 40, which have a length L0 as denoted by the dashed double-dotted line in FIG. 4 before the crash, are compressed into a length of L1 after the crash. The shell 20 moving diagonally forward and upward is gradually slowed down by this compressive deformation of the shock absorbers 40, whereby a diagonally forward and upward impact to be exerted on a child occupant can be absorbed.

In the present embodiment, the shock absorbers 40 are disposed under the seat portion 21. In general, a child seat has a space under the seat portion 21. Therefore, it is easy to dispose the shock absorbers 40 in that space. It is also easy to employ longer shock absorbers 40 to allow for larger portions to be deformed by compression.

In the above-described embodiment, the rods 37 serving as load bearing members and connected to the link arms 30 deform the shock absorbers 40. Alternatively, as shown in FIGS. 5 and 6, shock absorbers 50 may be disposed between supporting members 51 provided on the base 10 and supporting members 52 provided on the shell 20 so as to be compressed and deformed by these supporting members 51 and 52 to absorb an impact, when the shell 20 moves diagonally forward and upward upon a head-on crash of a vehicle.

In FIG. 5, the supporting members 52 are provided on the supporting plates 28, and the shock absorbers 50 are provided on the upper portion of a child seat 1A. In FIG. 6, the shock absorbers 50 are provided under the child seat 1B. However, the shock absorbers 50 may be positioned other than the positions shown in FIGS. 5 and 6.

In FIG. 5, the shell 20 is connected to the base 10 at the lower portion by link arms 30A, the first pivot 31, and the second pivot 34. However, as shown in FIG. 6, the shell 20 may be provided with guides 60 in the form of an elongated aperture or a groove, with which engaging members 61 such as pins provided on the base are engaged. The guides 60 extend diagonally forward and upward. When the shell 20 moves diagonally forward and upward, the engaging members 61 slide along the guides 60. Although a drawing thereof will not be presented here, the base 10 may be provided with the guides 60 and the shell 20 may be provided with the engaging members 61.

In the embodiments, the shock absorbers are deformed by compression when the shell 20 moves diagonally forward and upward. However, the shock absorbers may be deformed by tension or bending. Alternatively, the shock absorbers may be deformed so as to be split.

In the present invention, the shell may have a reclining mechanism.

## Claims

1. A child seat adapted to be mounted on a seat cushion (2) of a vehicle, comprising:
a base (10) including a bottom portion (11) adapted to be placed on the seat cushion and an upright portion (12) standing upright from the bottom portion; and
a shell (20) including a seat portion (21) on which a child occupant sits and a back portion (22) for supporting the back of the child occupant, the seat portion being disposed on the bottom portion, and the back portion being disposed along the upright portion,
wherein the child seat, in a rear-facing mounting state in which the child seat is mounted on the seat cushion so as to face the rear of the vehicle, is adapted to take an inclined-forward position in which the back portion leans toward the front of the vehicle, **characterized in that**:
the child seat includes a guide (14) for moving the shell diagonally forward and upward along the upright portion when the vehicle carrying the child seat mounted in the rear-facing mounting state experiences a head-on crash, and
wherein the child seat includes a shock absorber (40; 50) adapted to absorb an impact by being deformed by the shell moving diagonally forward and upward.

2. The child seat according to claim 1,
wherein an upper portion of one of the upright portion and the back portion is provided with an elongated aperture or a groove (13;60) serving as the guide that extend diagonally forward and upward in the rear-facing mounting state, and
wherein the other of the upright portion and the back portion is provided with an engaging portion (28) engaged with the guide.

3. The child seat according to claim 2, wherein an angle of elevation of the guide in the rear-facing mounting state is in the range of 50 to 70 degrees.

4. The child seat according to claims 2 or 3, further comprising:
a link arm (30;30A) provided between the seat portion of the shell and the bottom portion of the base so as to extend in the front-rear direction in the rear-facing mounting state, a front end of the link arm in the front-rear direction of the vehicle being rotatably connected to the bottom portion with a lower pivot (31), a back end of the link arm in the front-rear direction of the vehicle being rotatably connected to the seat portion with an upper pivot (34), the link arm being rotated forward and upward about the lower pivot when the shell moves diagonally forward and upward.

5. The child seat according to claim 4, further comprising:
a load bearing member (37) that moves in response to the forward and upward rotation of the link arm and applies a load to the shock absorber so as to deform the shock absorber, the load bearing member being connected to the link arm.

6. The child seat according to claim 5, wherein, in the rear-facing mounting state, a front end of the load bearing member is connected to the link arm at a connection point positioned in front of and above the upper pivot,
wherein the load bearing member extends backward from the connection point through a vertical drop wall (24) provided on the seat portion, and
wherein the load bearing member has a stopper (38) at a back end, the shock absorber being disposed between the stopper and the vertical drop wall so as to be deformed by being compressed between the vertical drop wall and the stopper by the shell moving diagonally forward and upward, thereby absorbing an impact.

7. The child seat according to claim 6, wherein the load bearing member includes a rod (37), and the shock absorber has a cylindrical shape and is fitted around the rod.

8. The child seat according to any one of claims 1 to 7, wherein the shock absorber (50) is disposed between a supporting member provided on the upright portion and a supporting member provided on the back portion.

9. The child seat according to any one of claims 1 to 7, wherein the shock absorber (50) is disposed between a supporting member (51) provided on the bottom portion and a supporting member (52) provided on the seat portion.

## Patentansprüche

1. Kindersitz zum Montieren an ein Sitzpolster (2) eines Fahrzeugs, mit:
einer Basis (10) mit einem Bodenabschnitt (11), der angepasst ist, um auf dem Sitzpolster platziert zu werden, und einem aufrechten Abschnitt (12), der vom Bodenabschnitt aufrecht steht; und
einer Schale (20) mit einem Sitzabschnitt (21), auf dem ein Kind als Insasse sitzt, und einem Rückenabschnitt (22) zum Stützen des Rückens des Kindes als Insasse, wobei der Sitzabschnitt auf dem Bodenabschnitt, und der Rückenabschnitt entlang des aufrechten Abschnitts angeordnet ist,
wobei der Kindersitz in einem nach hinten gerichteten Montagezustand, in dem der Kindersitz auf dem Sitzpolster so montiert ist, dass er der Rückseite des Fahrzeugs zugewandt ist, ausgebildet ist, um eine nach vorn geneigte Position einzunehmen, in der sich der Rückenabschnitt zur Front des Fahrzeugs neigt,
**dadurch gekennzeichnet, dass**:
der Kindersitz eine Führung (14) aufweist, um die Schale diagonal vorwärts und aufwärts entlang des aufrechten Abschnitts zu bewegen, wenn das den Kindersitz im nach hinten gerichteten Montagezustand tragende Fahrzeug einen Frontalzusammenstoß erfährt, und
wobei der Kindersitz einen Stoßdämpfer (40; 50) aufweist, der angepasst ist, um einen Aufprall zu absorbieren, indem er durch die sich diagonal vorwärts und aufwärts bewegende Schale deformiert wird.

2. Kindersitz nach Anspruch 1,
wobei ein oberer Abschnitt des aufrechten Abschnitts oder des Rückenabschnitts mit einer länglichen Ausnehmung oder einer Nut (13; 60) versehen ist, die als Führung dient, welche sich diagonal vorwärts und aufwärts im nach hinten gerichteten Montagezustand erstreckt, und
wobei der andere von dem aufrechten Abschnitt oder dem Rückenabschnitt mit einem Eingriffabschnitt (28) versehen ist, der mit der Führung in Eingriff ist.

3. Kindersitz nach Anspruch 2, wobei ein Steigungswinkel der Führung im nach hinten gerichteten Montagezustand im Bereich von 50 bis 70 Grad ist.

4. Kindersitz nach Anspruch 2 oder 3, ferner mit:
einem Gelenkarm (30; 30A), der zwischen dem Sitzabschnitt der Schale und dem Bodenabschnitt der Basis vorgesehen ist, um sich im nach hinten gerichteten Montagezustand in Vorwärts-Rückwärtsrichtung zu erstrecken, wobei ein vorderes Ende des Gelenkarms in Vorwärts-Rückwärtsrichtung des Fahrzeugs mittels eines unteren Drehgelenks (31) drehbar mit dem Bodenabschnitt verbunden ist, ein hinteres Ende des Gelenkarms in Vorwärts-Rückwärtsrichtung des Fahrzeugs mittels eines oberen Drehgelenks (34) mit dem Sitzabschnitt verbunden ist, und wobei der Gelenkarm vorwärts und aufwärts um den unteren Drehgelenk gedreht wird, wenn die Schale sich diagonal vorwärts und aufwärts bewegt.

5. Kindersitz nach Anspruch 4, ferner mit:
einer tragenden Struktur (37), die sich in Antwort auf die Vorwärts- und Aufwärtsdrehung des Gelenkarms bewegt und eine Last auf den Stoßdämpfer aufbringt, um den Stoßdämpfer zu deformieren, wobei die tragende Struktur mit dem Gelenkarm verbunden ist.

6. Kindersitz nach Anspruch 5, wobei im nach hinten gerichteten Montagezustand ein vorderes Ende der tragenden Struktur an einem Verbindungspunkt, der vor und über dem oberen Drehgelenk positioniert ist, mit dem Gelenkarm verbunden ist,
wobei die tragende Struktur sich vom Verbindungspunkt nach hinten durch eine vertikal abfallende Wand (24), die am Sitzabschnitt vorgesehen ist, erstreckt, und
wobei die tragende Struktur an einem hinteren Ende einen Anschlag (38) hat und der Stoßdämpfer zwischen dem Anschlag und der vertikal abfallenden Wand angeordnet ist und deformiert wird, wenn er zwischen der vertikal abfallenden Wand und dem Anschlag durch die sich diagonal vorwärts und aufwärts bewegende Schale zusammengedrückt wird, so dass ein Aufprall absorbiert wird.

7. Kindersitz nach Anspruch 6, wobei die tragende Struktur eine Stange (37) aufweist, und der Stoßdämpfer eine zylindrische Form hat und die Stange passend umschließt.

8. Kindersitz nach einem der Ansprüche 1 bis 7, wobei der Stoßdämpfer (50) zwischen einem am aufrechten Abschnitt vorgesehenen Stützteil und einem am Rückenabschnitt vorgesehenen Stützteil angeordnet ist.

9. Kindersitz nach einem der Ansprüche 1 bis 7, wobei der Stoßdämpfer (50) zwischen einem am Bodenabschnitt vorgesehenen Stützteil (51) und einem am Sitzabschnitt vorgesehenen Stützteil (52) angeordnet ist.

## Revendications

1. Siège pour enfant prévu pour être monté sur un coussin de siège (2) d'un véhicule, comprenant :
une base (10) comportant une partie de fond (11) prévue pour être mise en place sur le coussin de siège et une partie montante (12) s'élevant depuis la partie de fond ; et
une coque (20) comportant une partie d'assise (21) sur laquelle est assis un enfant passager et une partie de dossier (22) destinée à supporter le dos de l'enfant passager, la partie d'assise étant disposée sur la partie de fond, et la partie de dossier étant disposée le long de la partie montante,
où le siège pour enfant, dans un état de montage opposé à l'arrière où le siège pour enfant est monté sur le coussin de siège de manière à faire face à l'arrière du véhicule, est prévu pour se mettre dans une position inclinée vers l'avant où la partie de dossier est inclinée vers l'avant du véhicule, **caractérisé en ce que** :
le siège pour enfant présente une glissière (14) pour déplacer la coque diagonalement vers l'avant et vers le haut le long de la partie montante quand the véhicule supportant le siège pour enfant monté en état de montage opposé à l'arrière est soumis à une collision frontale,
et
**en ce que** le siège pour enfant est pourvu d'un amortisseur de chocs (40 ; 50) prévu pour absorber un impact en étant déformé par la coque se déplaçant diagonalement vers l'avant et vers le haut.

2. Siège pour enfant selon la revendication 1,
où une section supérieure de la partie montante ou de la partie de dossier présente une ouverture oblongue ou une rainure (13 ; 60) servant de glissière s'étendant diagonalement vers l'avant et vers le haut en état de montage opposé à l'arrière, et où l'autre partie de la partie montante ou de la partie de dossier présente une section d'engagement (28) en prise avec la glissière.

3. Siège pour enfant selon la revendication 2, où un angle d'élévation de la glissière en état de montage opposé à l'arrière est compris entre 50 et 70 degrés.

4. Siège pour enfant selon la revendication 2 ou la revendication 3, comprenant en outre :
un bras de liaison (30 ; 30A) prévu entre la partie d'assise de la coque et la partie de fond de la base de manière à s'étendre de l'avant vers l'arrière en état de montage opposé à l'arrière, une extrémité avant du bras de liaison dans la direction de l'avant vers l'arrière du véhicule étant rotativement raccordée à la partie de fond par un pivot inférieur (31), une extrémité arrière du bras de liaison dans la direction de l'avant vers l'arrière du véhicule étant rotativement raccordée à la partie d'assise par un pivot supérieur (34), le bras de liaison étant entraîné en rotation vers l'avant et vers le haut autour du pivot inférieur quand la coque se déplace diagonalement vers l'avant et vers le haut.

5. Siège pour enfant selon la revendication 4, comprenant en outre :
un élément de charge (37) qui se déplace en réaction à la rotation vers l'avant et vers le haut du bras de liaison et applique une charge sur l'amortisseur de chocs de manière à déformer l'amortisseur de chocs, ledit élément de charge étant raccordé au bras de liaison.

6. Siège pour enfant selon la revendication 5, où, en état de montage opposé à l'arrière, une extrémité avant de l'élément de charge est raccordée au bras de liaison à un emplacement de connexion situé devant et au-dessus du pivot supérieur,
l'élément de charge s'étendant vers l'arrière depuis l'emplacement de connexion, au travers d'une paroi de chute verticale (24) prévue sur la partie d'assise, et
l'élément de charge présentant une pièce d'arrêt (38) à une extrémité arrière, l'amortisseur de chocs étant disposé entre la pièce d'arrêt et la paroi de chute verticale de manière à être déformé en étant comprimé entre la paroi de chute verticale et la pièce d'arrêt par la coque se déplaçant diagonalement vers l'avant et vers le haut, et à amortir ainsi un impact.

7. Siège pour enfant selon la revendication 6, où l'élément de charge comprend une tige (37), et où l'amortisseur de chocs est de forme cylindrique et est ajusté autour de la tige.

8. Siège pour enfant selon l'une des revendications 1 à 7,
où l'amortisseur de chocs (50) est disposé entre un élément de support prévu sur la partie montante et un élément de support prévu sur la partie de dossier.

9. Siège pour enfant selon l'une des revendications 1 à 7,
où l'amortisseur de chocs (50) est disposé entre un élément de support (51) prévu sur la partie de fond et un élément de support (52) prévu sur la partie d'assise.
